# EUROPÄISCHE PATENTANMELDUNG

(11) **EP 4 843 692 A1**
(43) Veröffentlichungstag der Anmeldung: **25.11.2026**
(21) Anmeldenummer: 26179783.1
(22) Anmeldetag: 20.05.2026
(51) Int. Cl.: B23D 47/04, B27B 5/065

(54) **ZUFÜHREINRICHTUNG**

(30) Priorität: 22.05.2025 DE 102025119924
(71) Anmelder: HOMAG GmbH, 72296 Schopfloch (DE)
(72) Erfinder: Schlaich, Luis, 72351 Geislingen (DE); Dettling, Peter, 72160 Horb (DE); Kirn, Christoph, 72270 Baiersbronn (DE); Wendler, Marco, 72202 Nagold (DE)
(74) Vertreter: Hoffmann Eitle

(57) **Zusammenfassung**

Es wird eine Zuführeinrichtung zum Zuführen eines Werkstücks zu einer Führungsvorrichtung einer Bearbeitungsmaschine bereitgestellt, umfassend: eine Halteeinrichtung zum Halten des Werkstücks, eine Schiebeeinrichtung mit einer Ausrichteinrichtung, wobei die Ausrichteinrichtung zum Ausrichten des Werkstücks bewegbar ist.

## Beschreibung

### Technisches Gebiet

Die Erfindung betrifft eine Zuführeinrichtung zum Zuführen eines Werkstücks zu einer Führungsvorrichtung einer Bearbeitungsmaschine sowie ein System mit einer Zuführeinrichtung und einer Bearbeitungsmaschine. Mit einer derartigen Zuführeinrichtung können bevorzugt plattenförmige Werkstücke einer Bearbeitungsmaschine zugeführt werden.

### Stand der Technik

In Bereich der holzverarbeitenden Industrie werden plattenförmige Werkstücke oftmals händisch einer Bearbeitungsmaschine zugeführt. Ein Maschinenbediener greift dabei ein Werkstück, legt dieses auf eine Führungsvorrichtung und richtet das Werkstück aus. Das Werkstück wird nachfolgend mittels eines Förderbandes durch die Bearbeitungsmaschine geführt.

In der DE 10 2021 116 333 A1 wird eine Führungsvorrichtung am Maschineneinlauf beziehungsweise Maschinenauslauf und eine Bearbeitungsmaschine beschrieben. Die Führungsvorrichtung weist eine Auflagefläche mit Luftauslässen auf, wobei die Luftauslässe eingerichtet sind, durch austretende Luft ein Luftkissen zwischen der Auflagefläche und dem Werkstück zu erzeugen.

Unabhängig davon ist es bekannt, ein plattenförmiges Werkstück mittels einer an einem Roboter angebrachten Saugtraverse aufzunehmen und das Werkstück von einem Werkstückstapel zu einer Auflageeinrichtung zu bewegen.

Falls allerdings ein vergleichsweise klein dimensioniertes Werkstück mit einer Saugtraverse einer Bearbeitungsmaschine zugeführt werden sollte, bestünde die Gefahr, dass die Saugtraverse mit einem Oberdruck der Bearbeitungsmaschine kollidiert, oder das Werkstück während der Übergabe nicht sicher gehalten werden kann.

### Darstellung der Erfindung

Die Erfindung zielt darauf ab, die Flexibilität und die Zuverlässigkeit bei der Zuführung eines Werkstücks zu einer Bearbeitungsmaschine zu verbessern.

Die Zuführeinrichtung mit den Merkmalen gemäß Anspruch 1 stellt hierfür eine Lösung bereit. Weitere bevorzugte Ausführungsformen sind in den abhängigen Ansprüchen und in der nachfolgenden Beschreibung aufgeführt.

Die Zuführeinrichtung zum Zuführen eines, bevorzugt plattenförmigen, Werkstücks zu einer Führungsvorrichtung einer Bearbeitungsmaschine umfasst eine Halteeinrichtung zum Halten des Werkstücks, und eine Schiebeeinrichtung mit einer Ausrichteinrichtung, wobei die Ausrichteinrichtung zum Ausrichten des Werkstücks bewegbar ist. Bei einer solchen Bearbeitungsmaschine kann es sich um eine Bearbeitungsmaschine zum Aufbringen eines streifenförmigen Beschichtungsmaterials an einer Schmalseite eines Werkstücks handeln.

Die Zuführeinrichtung ermöglicht das sichere Zuführen, insbesondere auch eines vergleichsweise kleinen Werkstücks, zu einer Bearbeitungsmaschine. Dabei ist die Zuführeinrichtung so ausgeführt, dass beim Beschickprozess eine Kollision, insbesondere an einem Oberdruck der Bearbeitungsmaschine, vermieden werden kann. Das Führungsverhalten der Zuführeinrichtung gewährt über den gesamten Ablauf das sichere Halten des Werkstücks, um eine qualitativ anspruchsvolle Bearbeitung zu gewährleisen. Die Funktion einer Schiebeeinrichtung ist so gehalten, dass die Zuführeinrichtung entfernt werden kann.

Die Zuführeinrichtung ermöglicht das direkte Zuführen auch eines vergleichsweise klein dimensionierten Werkstücks mittels einer Handhabungseinrichtung. Die Zuführung des Werkstücks erfolgt direkt an einer Auflagefläche einer Führungsvorrichtung der Bearbeitungsmaschine und kann von dort von einer Fördereinrichtung der Bearbeitungsmaschine übernommen werden.

Gemäß einer Ausführungsform weist die Ausrichteinrichtung ein erstes Anlageelement und ein sich im Wesentlichen senkrecht zum ersten Anlageelement erstreckendes zweites Anlageelement auf. Somit kann das Werkstück an zwei Seiten ausgerichtet werden.

Dabei ist es bevorzugt, dass zwischen dem ersten Anlageelement und dem zweiten Anlageelement eine Aussparung vorgesehen ist. Die Ecke des auszurichtenden Werkstücks kann während des Ausrichtens in die Aussparung eindringen, sodass eine sichere Ausrichtung des Werkstücks am ersten Anlageelement und am zweiten Anlageelement ermöglicht wird.

Es ist ferner bevorzugt, dass die Ausrichteinrichtung einen Ausstellmechanismus aufweist, der eingerichtet ist, Ausrichteinrichtung in einer translatorischen Bewegung zu bewegen. Der Ausstellmechanismus kann als Pneumatikzylinder oder Hydraulikzylinder ausgebildet sein. Mittels der translatorischen Bewegung kann das Werkstück gegen eine Ausrichtfläche geschoben und somit ausgerichtet werden.

Dabei kann der Ausstellmechanismus druckgesteuert betätigt werden. Damit kann das Werkstück mit einem konstanten Druck sicher an einer Ausrichtfläche anliegen und eine Ausrichtung des Werkstücks wird durchgängig gewährleistet. Der Druck ist bevorzugt einstellbar. Somit können möglicherweise auftretende Toleranzen korrigiert werden.

Gemäß einer weiteren Ausführungsform umfasst die Schiebeeinrichtung eine Montagevorrichtung, um die Schiebeeinrichtung an der Halteeinrichtung anzubringen. Somit wird eine integrierte Einheit zum Halten und Ausrichten bereitgestellt.

Die Halteeinrichtung kann eingerichtet sein, das Werkstücks mittels Unterdruck zu halten. Insbesondere wird das Werkstück an einer Oberseite gehalten und kann auf eine Führungsvorrichtung abgelegt werden.

Als Halteeinrichtung kann eine erste Halteeinrichtung und eine zweite Halteeinrichtung vorgesehen sein, die beabstandet zueinander angeordnet sind, wobei die Schiebeeinrichtung zwischen der ersten Halteeinrichtung und der zweiten Halteeinrichtung angeordnet ist. Somit kann das Werkstück mittels der ersten und/oder zweiten Halteeinrichtung gehalten und mittels der zwischen der ersten Halteeinrichtung und der zweiten Halteeinrichtung angeordneten Schiebeeinrichtung bewegt werden.

Die Zuführeinrichtung kann eine Anschlussschnittstelle umfassen, die ausgebildet ist, die Zuführeinrichtung mit einer Handhabungseinrichtung, insbesondere einem Mehrachsroboter, zu verbinden. Entsprechend kann die Zuführeinrichtung an einer Handhabungseinrichtung angebracht werden.

Gemäß einem weiteren Aspekt wird ein System bereitgestellt, umfassend eine Bearbeitungsmaschine und eine Handhabungseinrichtung, wobei an der Handhabungseinrichtung eine Zuführeinrichtung gemäß einem der vorangegangenen Aspekte angebracht ist.

Das System kann eine Einhausung im Bereich der Handhabungseinrichtung umfassen. Somit ist die Handhabungseinrichtung für einen autonomen Betrieb eingerichtet. Die Einhausung kann auch Zugang für einen Bediener ermöglichen, sodass der Bediener alternativ oder zusätzlich zur Handhabungseinrichtung eine Handhabung von Werkstücken durchführen kann. Dies wird auch als ein teilautonomer Betrieb bezeichnet.

Ferner wird ein Verfahren zum Zuführen eines, insbesondere plattenförmigen, Werkstücks zu einer Führungsvorrichtung einer Bearbeitungsmaschine. Ein solches Werkstück kann aus Holz oder einem Holzwerkstoff ausgebildet sein. Das Verfahren umfasst die Schritte: Halten des Werkstücks mittels einer Halteeinrichtung und Übergeben des Werkstücks zur Führungsvorrichtung, und Bewegen einer Ausrichteinrichtung zum Ausrichten des an der Führungsvorrichtung angeordneten Werkstücks.

Im Rahmen des Verfahrens kann eine Zuführeinrichtung und/oder ein System gemäß einem der zuvor genannten Aspekte zum Einsatz kommen.

Gemäß einer bevorzugten Ausführungsform wird das Werkstück beim Bewegen mit der Ausrichteinrichtung mit einer Ausrichtfläche in Kontakt gebracht und um eine senkrecht zur Auflageebene des Werkstücks ausgerichtete Achse gedreht wird. Somit wird das Werkstück nach einem Kontakt mit der Ausrichtfläche der Ausrichteinrichtung gewissermaßen in einer Schwenkbewegung gegen die Ausrichtfläche bewegt. Somit kann ein sicheres Ausrichten des Werkstücks an der Ausrichtfläche gewährleistet werden.

### Kurze Beschreibung der Zeichnungen

Weitere Merkmale und Vorteile der Erfindung ergeben sich aus der nachfolgenden Beschreibung unter Bezugnahme auf die beiliegenden Zeichnungen.
- Fig. 1: zeigt eine perspektivische Ansicht einer Bearbeitungsmaschine, wobei ein Werkstück mittels einer erfindungsgemäßen Zuführeinrichtung zugeführt wird.
- Fig. 2: ist eine Detailansicht der erfindungsgemäßen Zuführeinrichtung.

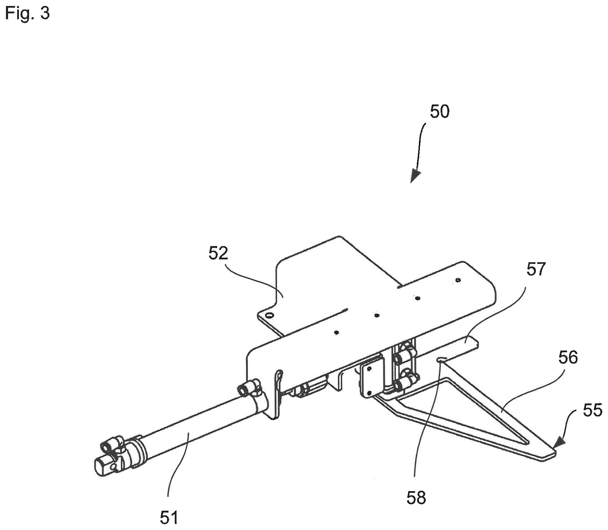

- Fig. 3: zeigt eine Ausrichteinrichtung der Zuführeinrichtung gemäß der Ausführungsform.

### Beschreibung von Ausführungsform

Anhand der beigefügten Zeichnungen wird eine Ausführungsform einer Zuführeinrichtung gemäß der Erfindung dargestellt. Modifikationen bestimmter Merkmale können jeweils miteinander kombiniert werden, um weitere Ausführungsformen auszubilden.

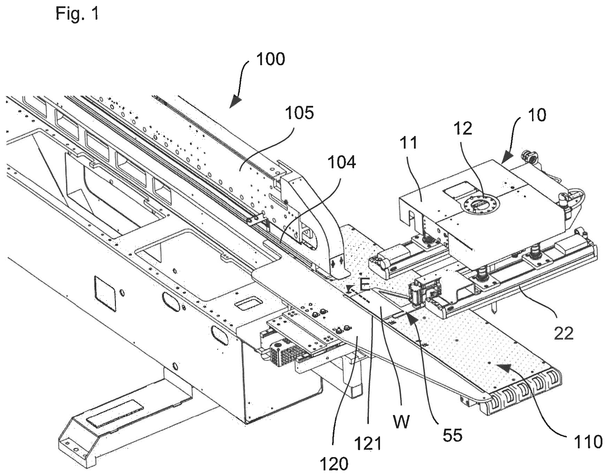

Fig. 1 ist eine perspektivische Ansicht einer Bearbeitungsmaschine 100, die zum Aufbringen eines streifenförmigen Beschichtungsmaterials an einer Schmalseite eines Werkstücks W eingesetzt wird. In Fig. 1 ist schematisch eine Einschubrichtung E dargestellt, in der das Werkstück W in den Einlauf der Bearbeitungsmaschine 100 eingeführt wird.

Die Bearbeitungsmaschine 100 weist eine Fördereinrichtung 104 sowie einen Oberdruck 105 auf, wobei die Fördereinrichtung 104 beispielsweise in Form eines Förderbandes, Förderriemens oder einer Förderkette ausgebildet ist. Ein auf der Fördereinrichtung 104 platziertes Werkstück wird zum Bearbeiten in der Bearbeitungsmaschine 100 zwischen dem Oberdruck 105 und der Fördereinrichtung 104 geklemmt, mittels der Fördereinrichtung 104 entlang einer Durchlaufrichtung bewegt und an aufeinanderfolgenden Stationen der Bearbeitungsmaschine 100 bearbeitet.

An der Bearbeitungsmaschine 100 ist eine Führungsvorrichtung 110 angebracht, die zum Einführen des Werkstücks W in die Bearbeitungsmaschine 100 dient. Eine Auflagefläche der Führungsvorrichtung 110 weist zur Aufnahme des Werkstücks W eine ebene Form auf.

Benachbart zur Führungsvorrichtung 110 ist eine Ausrichteinrichtung 120 vorgesehen, die eine sich in der Durchlaufrichtung erstreckende Ausrichtfläche 121 aufweist. An dieser Ausrichtfläche 121 kann das Werkstück W nach dem Auflegen auf die Führungsvorrichtung 110 ausgerichtet und der Bearbeitungsmaschine 100 im ausgerichteten Zustand zugeführt werden.

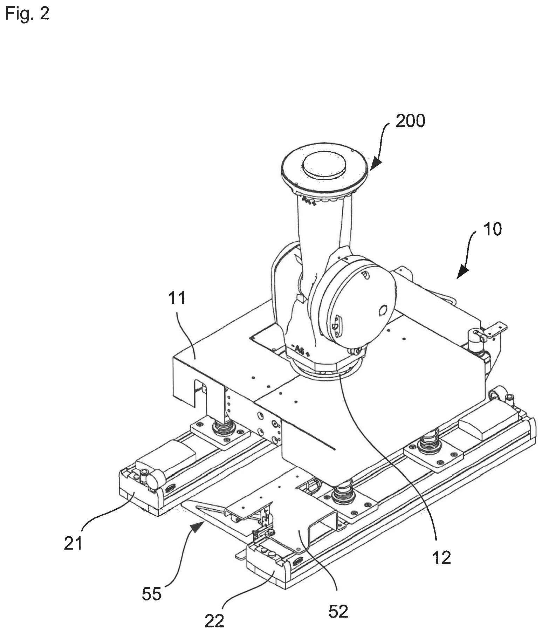

Um das Werkstück W zur Führungsvorrichtung 110 zu bewegen, beispielsweise von einem Werkstückstapel, ist eine Zuführeinrichtung 10 vorgesehen. Die Zuführeinrichtung 10 umfasst ein Gehäuse 11 sowie eine Anschlussschnittstelle 12. An der Anschlussschnittstelle 12 ist eine Handhabungseinrichtung 200, beispielweise ein Mehrachsroboter, angebracht (Fig. 2). Mittels der Handhabungseinrichtung 200 kann die Zuführeinrichtung 10 zwischen einem Werkstückstapel oder einem Werkstück-Rücklauf und der Führungsvorrichtung 110 bewegt werden, um ein Werkstück W zu übergeben.

Im Bereich der Führungsvorrichtung 110 kann eine (nicht dargestellte) Einhausung/Schutzzaun vorgesehen sein, sodass eine Handhabungseinrichtung 200 in einen autonomen oder teilautonomen Betrieb arbeiten kann.

Zum Halten des Werkstücks W umfasst die Zuführeinrichtung 10 eine erste Halteeinrichtung 21 und eine zweite Halteeinrichtung 22, die gemäß dem Ausführungsbeispiel mit Unterdruckeinrichtungen ausgestattet ist. Somit können plattenförmige Werkstücke mittels der ersten Halteeinrichtung 21 und/oder der zweiten Halteeinrichtung 22 aufgenommen und zwischen verschiedenen Orten bewegt werden.

Die Zuführeinrichtung 10 umfasst eine Schiebeeinrichtung 50, die mittels einer Montagevorrichtung 52 an der zweiten Halteeinrichtung 22 angebracht ist. Die Schiebeeinrichtung 50 ist zwischen der ersten Halteeinrichtung 21 und der zweiten Halteeinrichtung 22 angeordnet.

Gemäß weiteren Modifikationen kann die Schiebeeinrichtung 50 auch an der ersten Halteeinrichtung 21, an den Halteeinrichtungen 21, 22, oder dem Gehäuse 11 angebracht sein.

Die Schiebeeinrichtung 50 weist einen Ausstellmechanismus 51 auf, der eingerichtet ist, eine Ausrichteinrichtung 55 zu bewegen. Die Ausrichteinrichtung 55 umfasst ein erstes Anlageelement 56 und ein sich im Wesentlichen senkrecht zum ersten Anlageelement 56 erstreckendes zweites Anlageelement 57 auf. Das erste Anlageelement 56 und das zweite Anlageelement 57 sind im Ausführungsbeispiel einstückig, sie können jedoch auch mehrteilig ausgebildet sein.

Zwischen der durch das erste Anlageelement 56 und das zweite Anlageelement 57 gebildeten Ecken ist eine Aussparung 58 vorgesehen. Wenn ein Werkstück am ersten Anlageelement 56 und am zweiten Anlageelement 57 zur Anlage gebracht wird, kann eine Ecke des Werkstücks in die Aussparung 58 eindringen.

Ein Betrieb der Zuführeinrichtung 10 zum Zuführen des Werkstücks W zur Führungsvorrichtung 110 kann wie folgt durchgeführt werden.

Zunächst wird das Werkstück W mittels zumindest einer oder beiden der Halteeinrichtungen 21, 22 ergriffen und an der Führungsvorrichtung 110 aufgelegt.

Die Schiebeeinrichtung 50 sorgt während der Zuführung des Werkstücks in die Bearbeitungsmaschine 100 dafür, dass der Anlagewinkel an der Einschiebestelle korrekt hergestellt wird, wobei die Zuführeinrichtung 10 einen Vorschub in Richtung der Bearbeitungsmaschine 100 vollzieht. Während des gesamten Ablaufs bleibt die Ausrichteinrichtung 55 in Kontakt mit dem Werkstück W und erzeugt dabei einen definierten Anpressdruck an der Ausrichtfläche 121.

Weiterhin erzeugt der Ausstellmechanismus 51, der die Ausrichteinrichtung 55 in der horizontalen Richtung verschiebt, dafür, dass das Werkstück W mit einem konstanten Druck an der Ausrichtfläche 121 anliegt. Dieser Druck ist variabel einstellbar. Somit sind möglicherweise auftretende Toleranzen korrigierbar.

Die Ausrichteinrichtung 55 ist so ausgebildet, dass die Dicke kleiner ist als die Dicke des kleinsten zu bearbeitenden Werkstückes. Somit kann die Schiebeeinrichtung 50 auch unter den Oberdruck 105 der Bearbeitungsmaschine 100 geführt werden, ohne dass die Schiebeeinrichtung 50 von der Bearbeitungsmaschine 100 geklemmt und mitgeführt wird. Somit ist es möglich, die Führung des Werkstückes W auch noch eine gewisse Strecke unterhalb des Oberdruckes 105 aufrecht zu halten, bis das Werkstück W vollständig und fest genug von der Bearbeitungsmaschine 100 übernommen wurde.

Bei Bauteilen mit größeren Formaten kann die Schiebeeinrichtung 50 bei Bedarf aus dem Arbeitsbereich Fördereinrichtung 104 der Bearbeitungsmaschine 100 bewegt werden.

Der Bewegungsablauf vollzieht während des Beschickvorgangs eine kombinierte Bewegung aus linearem Vorschub und einer Rotation des Werkstücks. Dies stellt sicher, dass auch unter ungünstigen Bedingungen (z. B. ungünstiges Seitenverhältnis) das Werkstück vollständig an der Ausrichtfläche 121 anliegt.

Nachfolgend wird das Werkstück W in Einschubrichtung E bewegt, sodass das Werkstück W von der Fördereinrichtung 104 und dem Oberdruck 105 erfasst und durch die Bearbeitungsmaschine 100 bewegt wird.

## Patentansprüche

1. Zuführeinrichtung (10) zum Zuführen eines Werkstücks (W) zu einer Führungsvorrichtung (110) einer Bearbeitungsmaschine (100), umfassend:
eine Halteeinrichtung (21, 22) zum Halten des Werkstücks (W),
eine Schiebeeinrichtung (50) mit einer Ausrichteinrichtung (55), wobei die Ausrichteinrichtung (55) zum Ausrichten des Werkstücks (W) bewegbar ist.

2. Zuführeinrichtung (10) gemäß Anspruch 1, wobei die Ausrichteinrichtung (55) ein erstes Anlageelement (56) und ein sich im Wesentlichen senkrecht zum ersten Anlageelement (56) erstreckendes zweites Anlageelement (57) aufweist.

3. Zuführeinrichtung (10) gemäß Anspruch 2, wobei zwischen dem ersten Anlageelement (56) und dem zweiten Anlageelement (57) eine Aussparung (58) vorgesehen ist.

4. Zuführeinrichtung (10) gemäß einem der vorangegangenen Ansprüche, wobei die Ausrichteinrichtung (55) einen Ausstellmechanismus (51) aufweist, der eingerichtet ist, Ausrichteinrichtung (55) in einer translatorischen Bewegung zu bewegen.

5. Zuführeinrichtung (10) gemäß Anspruch 4, wobei Ausstellmechanismus (51) druckgesteuert betätigt wird.

6. Zuführeinrichtung (10) gemäß einem der vorangegangenen Ansprüche, wobei die Schiebeeinrichtung (50) eine Montagevorrichtung (52) umfasst, um die Schiebeeinrichtung (50) an der Halteeinrichtung (21, 22) anzubringen.

7. Zuführeinrichtung (10) gemäß einem der vorangegangenen Ansprüche, wobei die Halteeinrichtung (21, 22) eingerichtet ist, das Werkstücks (W) mittels Unterdruck zu halten.

8. Zuführeinrichtung (10) gemäß einem der vorangegangenen Ansprüche, wobei als Halteeinrichtung eine erste Halteeinrichtung (21) und eine zweite Halteeinrichtung (22) vorgesehen sind, die beabstandet zueinander angeordnet sind, wobei die Schiebeeinrichtung (50) zwischen der ersten Halteeinrichtung (21) und der zweiten Halteeinrichtung (22) angeordnet ist.

9. Zuführeinrichtung (10) gemäß einem der vorangegangenen Ansprüche, umfassend eine Anschlussschnittstelle (12), wobei die Anschlussschnittstelle (12) ausgebildet ist, die Zuführeinrichtung (10) mit einer Handhabungseinrichtung (200), insbesondere einem Mehrachsroboter, zu verbinden.

10. System, umfassend eine Bearbeitungsmaschine (100) und eine Handhabungseinrichtung (200), wobei an der Handhabungseinrichtung (200) eine Zuführeinrichtung (10) gemäß einem der vorangegangenen Ansprüche angebracht ist.

11. Verfahren zum Zuführen eines Werkstücks (W) zu einer Führungsvorrichtung (110) einer Bearbeitungsmaschine (100), umfassend die Schritte:
Halten des Werkstücks (W) mittels einer Halteeinrichtung (21, 22) und Übergeben des Werkstücks (W) zur Führungsvorrichtung (110), und
Bewegen einer Ausrichteinrichtung (55) zum Ausrichten des an der Führungsvorrichtung (110) angeordneten Werkstücks (W) .

12. Verfahren gemäß Anspruch 11, wobei das Werkstück (W) beim Bewegen mit der Ausrichteinrichtung (55) mit einer Ausrichtfläche (121) in Kontakt gebracht und um eine senkrecht zur Auflageebene ausgerichtete Achse gedreht wird.
